# EUROPÄISCHE PATENTANMELDUNG

(11) **EP 2 876 087 A1**
(43) Veröffentlichungstag der Anmeldung: **27.05.2015**
(21) Anmeldenummer: 13193703.9
(22) Anmeldetag: 20.11.2013
(51) Int. Cl.: C02F 1/04

(54) **Unterdruck-Latentwärmeverdampfer**

(71) Anmelder: Zenker, Wolfgang, 4810 Gmunden (AT)
(72) Erfinder: Zenker, Wolfgang, 4810 Gmunden (AT)

(57) **Zusammenfassung**

Die Gewinnung von Trinkwasser aus Meerwasser erfordert nach dem Stand der Technik einen hohen Einsatz von Primärenergie aus fossilen Energieträgern. Im Unterdruck- Latentwärmeverdampfer kann durch den Energieträger feuchte Luft die Verdampfung von Wasser auf dem Niveau der Umgebungstemperatur erfolgen. Hierzu ist an die Saugseite eines Unterdruckerzeugers (Abb.5 (1)) ein Verdampfungsbehälter (2) angeschlossen. Beide bilden ein beidseitig gegen die Atmosphäre offenes Gesamtsystem. Durch den Volumenstrom von feuchter Luft entsteht an einem Strömungswiderstand (6) im Verdampfungsraum (4) ein dynamischer Unterdruck, welcher ein vom Atmosphärendruck gelöster Absolutdruck ist. Die Verdampfung erfolgt unter diesem Druck durch den Austausch von Latentwärme zwischen dem Energieträger und dem Verdampfungsgut. Es muss nur noch die geringe Technische Arbeit des Unterdruckerzeugers durch Primärenergie gedeckt werden. Auch die Aufgaben Entfeuchtung und Kühlung von Luft in Anlagen zur Luftbehandlung können mithilfe dieses Verfahrens mit geringem Energieeinsatz und ohne den Einsatz problematischer Stoffe durchgeführt werden.

## Beschreibung

### Technisches Gebiet

1. Die Trennung wässriger Salzlösungen wie Sole oder Meerwasser.
2. Die Behandlung von Raumluft durch Kühlung und Entfeuchtung.

### Stand der Technik

Wässrige Salzlösungen wie Sole zur Speisesalzgewinnung oder wie Meerwasser zur Trinkwassergewinnung werden im großtechnischen Maßstab durch thermische Verfahren getrennt, bei denen die Verdampfung von Wasser aus dem Verdampfungsgut bei Drücken weit oberhalb des Umgebungsdrucks erfolgt. Auf der physikalischen Grundlage des osmotischen Druckes wird insbesondere zur Trinkwassergewinnung aus Meerwasser das Umkehrosmoseverfahren angewendet. Beiden Verfahren sind trotz Methoden der Energierückgewinnung ein hoher Einsatz von Primärenergie gemeinsam. Auch zur Entfeuchtung und Kühlung von Raumluft in Klimaanlagen muss nach dem Stand der Technik Kühlleistung ausschließlich durch Primärenergie bereitgestellt werden.

### Kurzbeschreibung der Erfindung

Die thermische Trennung wässriger Salzlösungen findet bisher bei Drücken oberhalb des Umgebungsdruckes und daher bei Temperaturen über 100° C statt. Jede Verdampfung erfolgt grundsätzlich unter Absolutdruck. Wenn es möglich wäre, den Absolutdruck in einem System mit geringem Energieeinsatz auf etwa 20 mbar zu senken, dann könnte die Verdampfung bereits bei 18°C erfolgen, also auf dem Temperaturniveau der Umgebung. Die Erfindung beruht auf einem durchgeführten Experiment, das im Folgenden beschrieben wird.
1. Eine Kunststoffschale wird mit Kosmetikwatte gefüllt, die bis zur völligen Sättigung Wasser aus der Schale aufsaugt. Auf die Oberfläche des Wattekörpers wird bündig schließend das Saugrohr eines Haushaltstaubsaugers gesetzt und dieser eingeschaltet. Er arbeitet nun als Unterdruckerzeuger gegen den Atmosphärendruck und erzeugt den größtmöglichen Saugdruck im Wattekörper. Ergebnis: Auch nach Ablauf einer längeren Zeit ist am *System* bestehend aus *Unterdruckerzeuger* und *Wattekörper* keine Veränderung bemerkbar.
2. Der Boden der Schale wird nun mit mehreren Bohrungen versehen, sodass auch dort eine Verbindung zum Umgebungsdruck vorhanden ist und der Versuch wiederholt. Ergebnis: Es wird am Saugrohr aus Metall sofort eine starke Abkühlung fühlbar. Innerhalb eines weiteren kurzen Zeitraums ist der Wattekörper bis auf eine geringe Restfeuchte entwässert und das entzogene Wasservolumen am Ausgang des Staubsaugers in flüssiger Form ausgefallen.
3. Physikalisch ist das Ergebnis so erklärbar, dass der Luftstrom im Strömungswiderstand des Wattekörpers einen geringen *dynamischen Differenzdruck* erzeugt, unter dessen Wirkung das Wasser bei Umgebungstemperatur im Wattekörper als *Verdampfungsraum* verdampfen kann, und am Systemausgang wieder verflüssigt wird. Die Verdampfung erfolgt hierbei unbeeinflusst durch den *statischen Umgebungsdruck.*

Analog hierzu ist die Erfindung eine Einrichtung, bestehend aus einem Unterdruckerzeuger und einem Verdampfer, durch die Wasser auf dem Niveau der Umgebungstemperatur verdampft werden kann **(Anspruch 1)** 1
1. Dass hierdurch die Trennung des *Verdampfungsguts* Meerwasser in Süßwasser und angereichertes Salzwasser durch die Nutzung des *Energieträgers* feuchte Luft ermöglicht wird **(Anspruch 2)** 2.
2. Dass hierdurch die Luftbehandlung als Kühlung und Entfeuchtung des *Energieträgers* feuchte Luft durch die Verdampfung des *Verdampfungsguts* Süßwasser ermöglicht wird **(Anspruch 3)** 3.

### Kurze Beschreibung der Zeichnungsfiguren

1. **Abb. 1** zeigt die physikalische Grundlage der Erfindung durch die Gegenüberstellung der Unterdruckerzeugung in einem geschlossenen und einem offenen System. Zugleich wird der Unterschied zwischen *statischem Unterdruck* und *dynamischem Unterdruck* dargestellt.
2. **Abb. 2** stellt im MOLLIER *h*₁₊ₓ*, x-* Diagramm beispielhaft den Verdampfungsprozess bei einem Luftzustand von *t*= 40°C und *ϕ*=1 dar, dessen Ergebnis den Vergleich von Ausbeute und Energiebedarf dieser Verdampfungsart mit dem Energiebedarf bekannter Methoden ermöglicht. Zugleich ist durch den Anfangs- und Endzustand der feuchten Luft die Möglichkeit der Luftbehandlung erläutert.
3. **Abb. 3** stellt eine Ausführungsart der Erfindung dar in welcher, wie im Experiment, der *Strömungswiderstand* durch einen *kapillaren Verdampfungskörper* gebilded wird.
4. **Abb. 4** zeigt eine Ausführungsart, in welcher der dynamische Unterdruck durch luftdurchlässiges Material mit einem Strömungswiderstand definierter Größe erzeugt wird, und der Energie-und Stoffaustausch zwischen feuchter Luft und Verdampfungsgut an der *Grenzschicht* beider Medien erfolgt.
5. **Abb. 5** zeigt eine Ausführungsart, bei welcher der dynamische Unterdruck wie in FIG 4 erzeugt wird. Das Verdampfungsgut wird jedoch durch Düsen eingesprüht und der Energie- und Stoffaustausch mit der feuchten Luft erfolgt im Gegenstrom beider Medien.

### Beschreibung der Ausführungsarten

Jede Verdampfung findet unter dem Absolutdruck statt. Es ist *p* = *p*_{amb} + *p* ₑ (1.1) Überdruckbereich *p = p*_{amb} - *p*ₑ (1.2) Unterdruckbereich Die bekannten technischen Verfahren finden im *Überdruckbereich* statt. Die Verdunstung von Wasser erfolgt in der Natur in der Grenzschicht zwischen feuchter Luft und Wasser unter dem Umgebungsdruck *p*_{amb}. Eine technische Lösung zur Verdampfung großer Masseströme Wasser im *Unterdruckbereich* ist nicht bekannt.

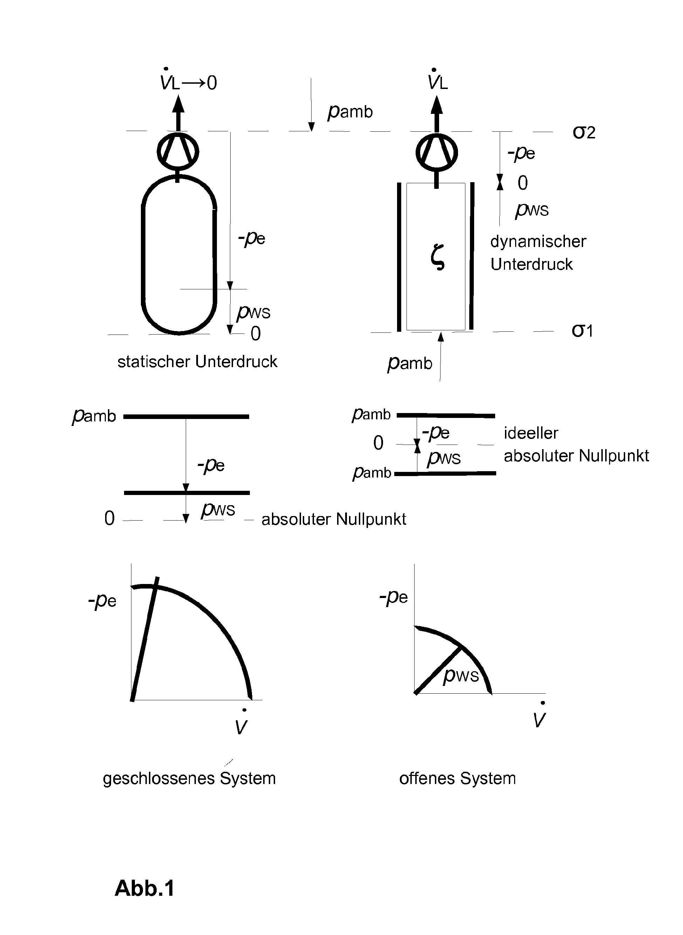

**Abb.1****)** Abbildung zeigt links ein *System* bestehend aus einem Behälter als *Verdampfungsraum* und einem *Unterdruckerzeuger.* Dieser entleert den Behälter zunächst von Luft bis zu seinem maximalen Saugdruck. Nun findet kein Stoffaustausch mehr statt, und das System ist quasi ein geschlossenes System. Der Unterdruck ist ein *statischer Unterdruck* gegenüber der Atmosphäre. Ein solches System ist technisch nicht zur Verdampfung eines Verdampfungsguts in einem *stationären Fließprozess* geeignet. Auch ist der Aufwand sehr groß, das hohe Vakuum zu erzeugen und aufrecht zu erhalten.

Auf der rechten Seite von **(****Abb.1****)** ist die Anordnung des beschriebenen Experiments dargestellt.

Das Gesamtsystem bestehend aus einem Unterdruckerzeuger und einem Verdampfungsraum ist ein beidseitig zur Atmosphäre offenes System **(Anspruch 4)** 4.

Der Verdampfungsraum besteht hier aus einem Wattekörper, dessen Kapillaren das *Verdampfungsgut* durch Kapillarität entgegen der Schwerkraft fördern. Seine Zwischenräume stellen für den Volumenstrom der feuchten Luft mit der Geschwindigkeit *v* einen Strömungswiderstand dar, welcher durch den Widerstandsbeiwert *ζ* ausgedrückt wird. Dieser bewirkt einen Druckverlust in Höhe von
Δ*p*_{V} = ζ*p v²* / 2 (2)*V* Quelle: [1] B49, 6.2.4

Es ist ersichtlich, dass dieser Differenzdruck aus der *kinetischen Energie* des Luftstroms herrührt, denn er ist der auf 1m³ des Luftstroms bezogene Verlust an kinetischer Energie, welcher im System in Wärme umgewandelt wird.
Δ*p*_{V} = ζ*E*ₖᵢₙ / *V* (3) Dieser Differenzdruck soll deshalb in Abgrenzung zum statischen Unterdruck als *dynamischer Unterdruck* bezeichnet werden. Er ist die physikalische Grundlage der Erfindung. **(****Abb. 1****)** Abbildung

In der Energiegleichung von BERNOULLI, ausgedrückt in Energiehöhen ist *H*= *v*²/(2*g*) + *p*/(*ρg*) *+z=* const (4.1) und geht für *v*= const und *z=* const über in *H*= *p* /(*ρg*) = const (4.2) *ρ* = f(p) für jedes *H*(4.3) Dies ist ein weiteres physikalische Merkmal der Erfindung **(Anspruch 8)** 8

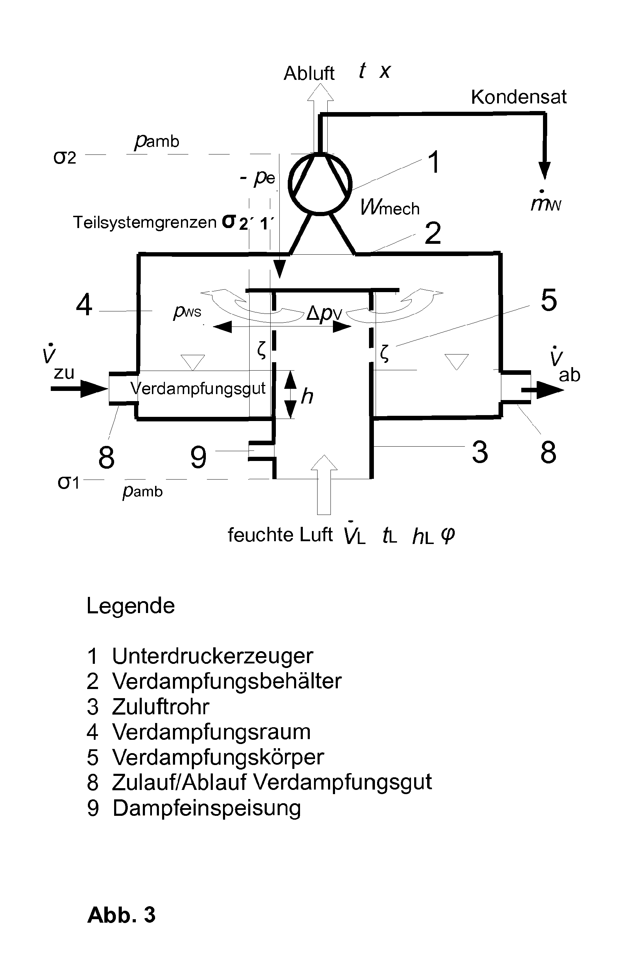

Gemäß [0007] und [0012] hat der Absolutdruck an der Grenze **2'** des *Teilsystems Verdampfungsraum* **(****Abb.3****)** Abbildung die Größe *p*₂ = *p*_{amb} + (-*p*ₑ) sowie *p*₂ = *p*_{amb} + Δ*p*_{V} (5.1) daher ist -*p*ₑ = Δ*p*_{V} (5.2) Beide Größen sind Absolutdrücke, denn *p*_{amb} kann beliebige Werte annehmen, ohne das Ergebnis zu beeinflussen.

An der Grenze **2'** herrscht als höchster Wert der *dynamische Druck p*_{dyn} = *p*_{\/abs}. mbar (6.1) Es ist der *ideelle Wert* eines *absoluten Nullpunktes* im System. Dieser Druck ist jedoch nicht als Vakuum und damit als eine statische Größe zu denken, denn der *statische Druck* beträgt dort messbar *p*ₛₜₐₜ = (*p*_{amb} - *p*ₑ) mbar (6.2) Im Teilsystem Verdampfungsraum herrscht ein wirksamer örtlicher dynamische Unterdruck ***p*V** als Absolutdruck. Er ist zugleich der dort *wirksame Gesamtdruck* der feuchten Luft. Dieser wird jedoch nur noch, wegen des Gleichgewichtszustandes der statischen Komponente Luft, durch den *Teildruck* ihres *Wassergehalts* in Form von Dampf repräsentiert.

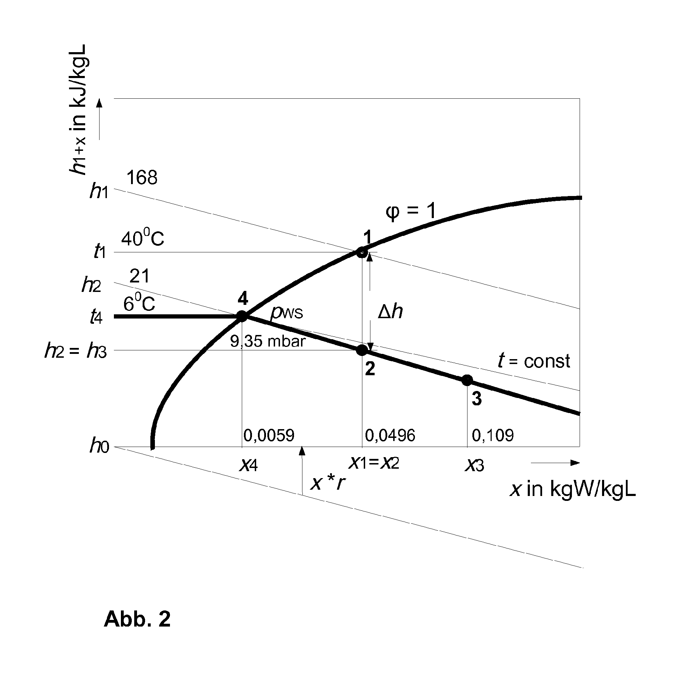

Der dynamische Unterdruck im Verdampfungsraum entspricht daher einem Teildruck ***p*wS** der Komponente Wasser der feuchten Luft im Sättigungszustand bei der Temperatur ***t.* (****Abb. 2****)** Abbildung *p*_{WS}(*t*) = f(*p*_{V}) (7)

Aus [0014], [0016] und [0017] folgt, dass der dynamische Unterdruck Im Verdampfer der Einrichtung nach Anspruch1 ein durch kinetische Energie vom Umgebungsdruck gelöster Absolutdruck ist, unter dem als Teildruck der feuchten Luft die Verdampfung erfolgt. **(Anspruch 5)** 5.

Er wird auf der Saugseite des Unterdruckerzeugers im Verdampfer durch den Strömungswiderstand des Verdampfungsraumes für den Volumenstrom feuchte Luft hervorgerufen **(Anspruch 6)** 6.

Der beidseitige Zugang der Einrichtung zur Atmosphäre nach Anspruch 4 ist zugleich die Voraussetzung zur Erzeugung des dynamischen Unterdrucks und die kontinuierliche Bereitstellung der feuchten Luft als Energieträger im Verdampfungsraum **(Anspruch 7)** 7.

In **(****Abb. 2****)** Abbildung ist der Verdampfungsprozess beispielhaft dargestellt:
1. Es durchströmt feuchte Luft des Zustandes von Punkt 1 den Verdampfungsraum und erzeugt an seinem Strömungswiderstand den Teildruck ***p*WS** von **9,35 mbar.** Ihm entspricht im Beispiel eine Sättigungstemperatur von **t= 60 C.** Die Luft kühlt unter *Zunahme* ihrer *Dichte* (Quelle: **[3]) (Anspruch 8)** 8 ab, und erreicht bei konstanter Wasserbeladung von ***x*1 = *x*2** den Punkt 2 im Nebelgebiet. Hierbei wird die Enthalpiedifferenz **Δ*h*** frei. (Quelle: [1] D26 9.2.2 und D47 Anh. D9 Tabelle1)
2. Der Energieträger feuchte Luft verliert unter dem dynamischen Druck des Verdampfungsraumes einen Teil seines Energieinhalts in Form von *Latentwärme* durch *Kondensation* **(Anspruch 8)** 8**.** *h*₁ - *h*₂ =-*Q*₁₂ (8)
3. Der Verdampfer ist ein adiabates und rigides offenes System, denn die Verweildauer der Luft ist für den Austausch mit der Umgebung zu kurz und es wird keine mechanische Arbeit über die Systemgrenzen übertragen. (Quelle: [2] 2.1.) Daher muss die freiwerdende Energie vom Verdampfungsgut aufgenommen werden. Dies geschieht in Form von *Latentwärmedurch* die *Verdampfung* von Wasser **(Anspruch 8)** 8 des Betrags Δ*x*₁ = *x*₃ *- x*₂ bei *h*₂ = *h*₃= const. (9) Es ist - *Q*₁₂ = *Q*₂₃ (9.1) 1 kgL * Δ*h=* Δ*x*₁ * *r*(9.2) *r* Verdampfungswärme in kJ/kg
4. Das Kilogramm Luft wird auf der Linie ***h*2 = const** mit der zusätzlichen Wassermenge **Δ*x*1** beladen und erreicht mit weiter vergrößerter Dichte **(Anspruch 8)** 8 den Punkt **3.**
5. Beim Verlassen des Systems erreicht die Luft mit dieser Temperatur und Wasserbeladung die Umgebung bei Punkt **4.** Der Gesamtdruck ist hier nicht mehr ***p*WS** sondern
6. *p* = *p*_{amb} + *p*_{WS} (10) Daher wird im gesättigten Zustand der feuchten Luft die Wassermasse zwischen ***x*3** und ***x*4** ausgeschieden. (Quelle: **[2]** 8.10) Δ*x*₂ = *x*₄ - *x*₃ (11)

Dies ist das Ergebnis der Anwendung: Trennung des Verdampfungsguts wässrige Salzlösung zur Süßwassergewinnung **(Anspruch 2)** 2. Solarthermische Maßnahmen zur Erwärmung und Wasserbeladung der Luft durch Dampf können die Ausbeute und Wirtschaftlichkeit des Prozesses noch erheblich steigern.

Wird die Aufgabe Luftbehandlung zugrunde gelegt, beschreibt der Zustand der Punkte **1** und **4** das Ergebnis, nämlich die Kühlung und Entfeuchtung des Energieträgers feuchte Luft. Hier ist Süßwasser das Verdampfungsgut **(Anspruch 3)** 3.

Die Wirkung der Einrichtung nach Anspruch 1 bis 3 beruht gemäß [0022] auf dem Austausch von Energie in Form von Latentwärme zwischen dem Energieträger feuchte Luft und dem Verdampfungsgut **(Anspruch 8)** 8.

Durch Primärenergie muss nur die Technische Arbeit ***W*t** des Unterdruckerzeugers gedeckt werden **(Anspruch 9)** 9.

Diese hat einen wesentlich geringeren Betrag als zur Verdampfung dieser Wassermasse unter Druck oberhalb des Umgebungsdrucks erforderlich wäre, und ist zudem Teil des gesamten Wärmestroms der Verdampfung. 1. Ihr spezifischer Betrag ***w*t** pro kg feuchte Luft ist *w*ₜ = - *p*ₑ * *v*_{L} (12) ***v*L** spezifisches Volumen feuchte Luft in m³/kgL *w*t << *m*_{W} ** r*(13) *m*w ausgeschiedene Wassermasse in kgW pro kgL.

Die Bilanz eines kontinuierlich ablaufenden Prozesses in einem offenen System ist 0 = *Q*(*t*)+ *P+ m*(*t*)***(*h*₁ + *v*₁²/2 + *gz₁*) - *m*(t)***(*h*2 + *v*₂²/2 + *gz₂*) (14.1) (Quelle: [1] D6 (16)) und ergibt mit *v*₁ *= v*₂ =*v; z₁* =*z*₂ und *P*= ξ**m*(t) **v*²/2 - *Q*(t) = *m*(t)*[(*h*₁ - *h*₂) + ξ *v*²/2] (14.2) ***m*(t)** Massestrom feuchte Luft ***Q*(t)** ist der gesamte Wärmestrom, welcher vom Energieträger feuchte Luft und vom Unterdruckerzeuger für die Verdampfung bereitgestellt wird.

Wird die Systemgrenze zu einem geschlossenen System erweitert, das den Antriebsmotor des Unterdruckerzeugers einschließt, dann wird die technische Arbeit mit dem Gesamtwirkungsgrad *η* von Motor und Arbeitsmaschine als ***W*mech**. bereitgestellt. Es ist für ***m*** kg feuchte Luft *ξ mv* ²/2 = *ηW*_{mech}. (15.1) *W*_{diss}. = (1 - *η*)W_{mech}. (15.2)

Die Änderung der Inneren Energie des geschlossenen Systems ist: *U*₂ - *U* ₁ = - *Q*₁₂ +(*W*_{diss})₁₂ (16.1) *U*₂ - *U*₁ = - Δ*U* (16.2) wegen |*Q*₁₂| >> |(W_{diss})| ₁₂ (16.3)

Die Innere Energie nimmt wegen der negativen Bilanz von Wärmeabgabe der feuchten Luft und dissipierter Energie aus den Maschinenverlusten unter Abkühlung der Umgebung ab.

Um die beschriebene Wirkung als stationärer Fließprozess zu erzielen, muss der Unterdruck- Latentwärmeverdampfer mehrere Aufgaben erfüllen. Dies sind als **(Anspruch 10):** 10
1. Die kontinuierliche Zufuhr und Abfuhr des Verdampfungsguts im Verdampfungsbehälter.
2. Die kontinuierliche Erhaltung des dynamischen Unterdrucks im Verdampfungsraum durch den Volumenstrom feuchte Luft als Energieträger.
3. Der kontinuierliche Energie- und Stoffaustausch zwischen dem Energieträger und dem Verdampfungsgut im Verdampfungsraum.
4. Die Trennung des Kondensats von der Abluft außerhalb des Systems.

Eine Ausführungsform zur Verwirklichung von **(Anspruch 10)** 10 zeigt **(****Abb. 3****)** Abbildung. Der Verdampfungsbehälter **(2)** besitzt Anschlüsse **(8)** für den kontinuierlichen Zulauf und Ablauf des Verdampfungsguts bis zur Höhe h. Diese Höhe ist durch die Regelung des Abflusses konstant zu halten. Er besitzt mittig ein Zuluftrohr **(3),** das oberhalb dieser Höhe große Öffnungen zum kontinuierlichen Durchtritt feuchter Luft besitzt, die vom Unterdruckerzeuger **(1)** angesaugt wird. In diesem Bereich ist es Träger des Verdampfungskörpers **(5)** aus Material mit kapillarer Eigenschaft. An seinem oberen Ende ist das Zuluftrohr verschlossen. Außerhalb des Verdampfungsbehälters kann eine Einspeisung **(9)** für Dampf die Erhöhung des Energieinhalts der Luft ermöglichen. Das kapillare Material bewirkt den kontinuierlichen Stofftransport des Verdampfungsguts gegen die Schwerkraft und erzeugt beim Durchtritt feuchter Luft im Kreuzstrom den internen dynamischen Unterdruck. Der kontinuierliche Energie- und Stoffaustausch erfolgt im Verdampfungskörper zwischen der feuchten Luft in den Zwischenräumen und dem in den Kapillaren verdampfenden Wasser. Auch im Verdampfungsraum **(4)** erfolgt Verdampfung in der Grenzschicht zwischen Luft und Verdampfungsgut. Am Austritt der Abluft fällt das Kondensat aus und kann in einem offenen Behälter gesammelt werden.

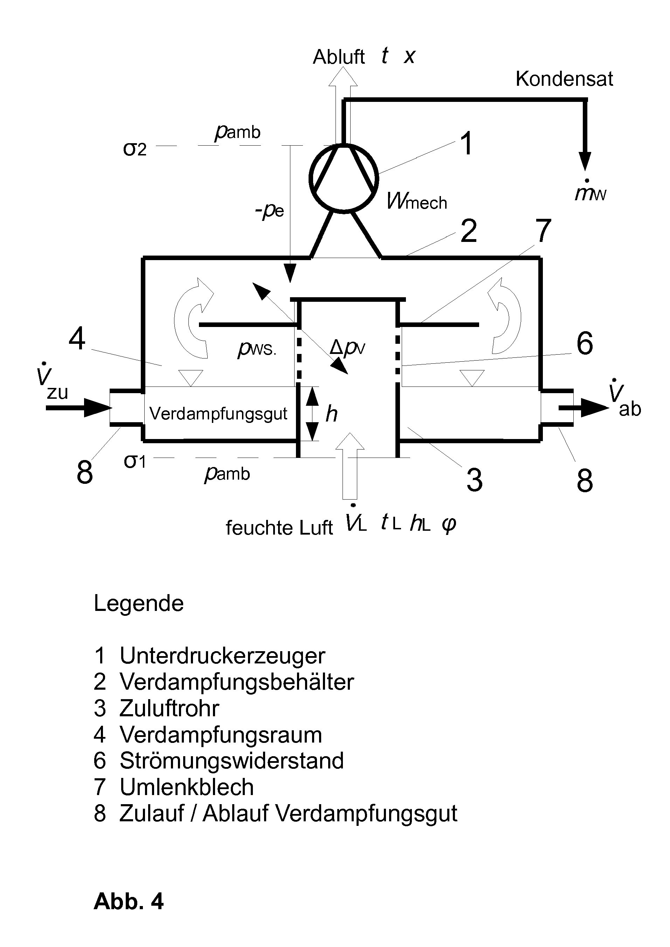

**(****Abb. 4****)** Abbildung zeigt eine weitere Ausführungsart mit gleicher technischer Wirkung. Diese besitzt im Gegensatz zu FIG 3 keinen Verdampfungskörper. Der mittlere, mit Öffnungen versehene Teil des Zuluftrohres ist mit einem luftdurchlässigen Material bespannt, dessen Dicke und Beschaffenheit den Strömungswiderstand definierter Größe **(6)** für die durchtretende feuchte Luft darstellt. Dieser Bereich wird oberhalb durch ein Umlenkblech **(7)** begrenzt, das den Luftstrom über die Oberfläche des Verdampfungsguts leitet. Hier erfolgt der Energie- und Stoffaustausch in der Grenzschicht zwischen beiden Medien wie dies bei der Verdunstung unter Atmosphärendruck erfolgt.

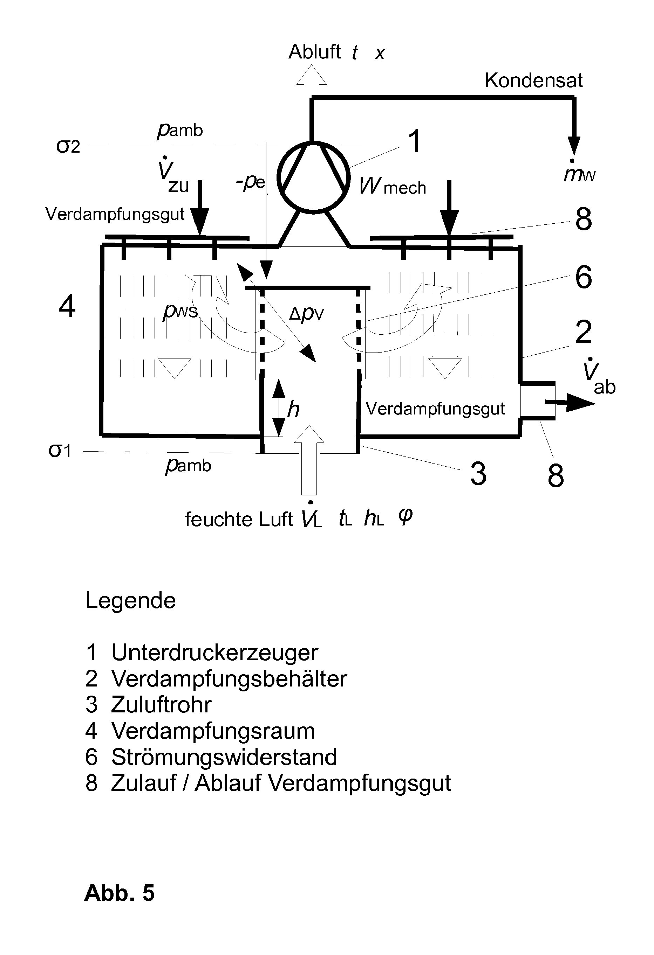

**(****Abb. 5****)** Abbildung zeigt eine Ausführungsart, deren Strömungswiderstand in gleicher Weise wie in FIG. 4 gebildet wird. Das Verdampfungsgut wird jedoch von der Oberseite des Verdampfungsbehälters (2) durch Düsen (8) fein verteilt als Sprühnebel zugeführt. Durch diesen wird die feuchte Luft im Verdampfungsraum im Gegenstrom geführt, wodurch ein großflächiger Energie- und Stoffaustausch gegeben ist. Die Abfuhr des angereicherten Verdampfungsguts erfolgt in gleicher Weise wie in FIG. 3 und FIG. 4.

### Gewerbliche Anwendbarkeit

1. Eine wichtige Anwendung von großer ethischer Bedeutung ist die Gewinnung von Trinkwasser aus Meerwasser. Die Anlagengröße kann von der Einzelversorgung bis zum industriellen Maßstab reichen.
2. Die Konzentration des Verdampfungsguts durch Entzug von Wasser kann wegen des geringen Energieaufwandes zur wirtschaftlichen Gewinnung von Speisesalz beitragen.

Aufgaben der Luftbehandlung wie Kühlung und Entfeuchtung können durch diese Einrichtung als Komponente von Klimaanlagen in Gebäuden und in Kraftfahrzeugen mit geringem Energieeinsatz und ohne den Einsatz problematischer Stoffe erfüllt werden.

### Literaturliste

[1] K.-H. Grote und J. Feldhusen DUBBEL Taschenbuch für den Maschinenbau, 22. Auflage, Springer- Verlag Berlin, Heidelberg, New York ISBN 978-3-540-49714-1 [2] Klaus Langeheinecke, Peter Jany, Gerd Thieleke Thermodynamik für Ingenieure 7. Auflage 2008 Verlag Vieweg und Teubner Wiesbaden , ISBN 978-3- 8348-0418-1 [3] Böhmer ITT TU Dresden, Jan. 2004 MOLLIER- h,x- Diagramm für feuchte Luft.

## Patentansprüche

1. **Unterdruck- Latentwärmeverdampfer dadurch gekennzeichnet, dass** er eine Einrichtung bestehend aus einem Unterdruckerzeuger und einem Verdampfer ist, durch die Wasser auf dem Niveau der Umgebungstemperatur verdampft werden kann.

2. **Unterdruck- Latentwärmeverdampfer** nach Anspruch 1 **dadurch gekennzeichnet, dass** hierdurch die Trennung des Verdampfungsguts Meerwasser in Süßwasser und angereichertes Salzwasser durch die Nutzung des Energieträgers feuchte Luft erfolgt.

3. **Unterdruck- Latentwärmeverdampfer** nach Anspruch 1 **dadurch gekennzeichnet, dass** hierdurch die Luftbehandlung als Kühlung und Entfeuchtung des Energieträgers feuchte Luft durch die Verdampfung des Verdampfungsguts Süßwasser erfolgt.

4. **Unterdruck- Latentwärmeverdampfer** nach Anspruch 1 **dadurch gekennzeichnet, dass** diese Einrichtung ein beidseitig zur Atmosphäre offenes Gesamtsystem ist.

5. **Unterdruck- Latentwärmeverdampfer** nach Anspruch 1 und 4 **dadurch gekennzeichnet, dass** im Verdampfer dieser Einrichtung durch kinetische Energie ein dynamischer Unterdruck als vom Atmosphärendruck gelöster Absolutdruck erzeugt wird, unter dem als Teildruck der feuchten Luft die Verdampfung erfolgt.

6. **Unterdruck- Latentwärmeverdampfer** nach Anspruch 1 und 5 **dadurch gekennzeichnet, dass** der dynamische Unterdruck auf der Saugseite des Unterdruckerzeugers im Verdampfer als Druckverlust am Strömungswiderstand des Verdampfungsraums für den Volumenstrom feuchte Luft erzeugt wird.

7. **Unterdruck- Latentwärmeverdampfer** nach Anspruch 1, 4 und 6 **dadurch gekennzeichnet, dass** der beidseitige Zugang zur Atmosphäre zugleich die Voraussetzung für die Erzeugung des dynamischen Unterdrucks und die kontinuierliche Durchströmung des Verdampfungsraumes durch die feuchte Luft als Energieträger ist.

8. **Unterdruck- Latentwärmeverdampfer** nach Anspruch 1, 2 und 3 **dadurch gekennzeichnet, dass** die Wirkung der Einrichtung auf dem Austausch von Energie in Form von Latentwärme zwischen dem Verdampfungsgut und dem Energieträger feuchte Luft und beruht, dessen Dichte hierdurch vergrößert wird.

9. **Unterdruck- Latentwärmeverdampfer** nach Anspruch 1, 2 und 3 **dadurch gekennzeichnet, dass** die Wirkung der Einrichtung nur Primärenergie zur Deckung der Technischen Arbeit *W*ₜ des Unterdruckerzeugers erfordert.

10. **Unterdruck- Latentwärmeverdampfer** nach Anspruch 1, 2 und 3 **dadurch gekennzeichnet, dass** diese Wirkung in der Einrichtung kontinuierlich durch die Zufuhr und Abfuhr des Verdampfungsguts im Verdampfungsbehälter, die Aufrechterhaltung des dynamischen Unterdrucks, den Energie- und Stoffaustausch zwischen feuchter Luft und Verdampfungsgut im Verdampfungsraum und die Trennung von Kondensat und Abluft an ihrem Austritt als stationärer Fließprozess ermöglicht wird.

## Geänderte Patentansprüche

### Geänderte Patentansprüche gemäss Regel 137(2) EPÜ.

1. **Unterdruck- Latentwärmeverdampfer**
**dadurch gekennzeichnet, dass**
er ein Reaktor mit einem eingebauten Strömungswiderstand definierter Größe ist, dessen technische Gestaltung den direkten Austausch von Latentwärme zwischen dem Energieträger feuchte Luft und dem Verdampfungsgut durch Kondensation und Verdampfung ohne weitere technische Betriebsmittel ermöglicht.

2. **Unterdruck- Latentwärmeverdampfer** nach Anspruch 1
**dadurch gekennzeichnet, dass**
dieser Reaktor ein geschlossener Behälter **(2)** ist, in den die durch einen Unterdruckerzeuger **(1)** angesaugte feuchte Luft durch ein Zuluftrohr **(3)** eintritt.

3. **Unterdruck- Latentwärmeverdampfer** nach Anspruch 1 und 2
**dadurch gekennzeichnet, dass**
das an seinem Ende verschlossene Zuluftrohr Öffnungen für den Durchtritt der Luft besitzt, die mit einem kapillaren oder anderen luftdurchlässigen Material bedeckt sind, das für den Luftstrom einen Strömungswiderstand **(5)** oder **(6)** definierter Größe darstellt.

4. **Unterdruck- Latentwärmeverdampfer** nach Anspruch 1 bis 3
**dadurch gekennzeichnet, dass**
dadurch zwischen dem Unterdruckerzeuger **(1)** und dem Strömungswiderstand **(5)** oder **(6)** ein Verdampfungsraum **(4)** geschaffen wird, in dem ein vom Atmosphärendruck gelöster Sättigungsdruck herrscht, durch den die Kondensationstemperatur des Energieträgers und die Siedetemperatur des Verdampfungsguts festgelegt sind.

5. **Unterdruck- Latentwärmeverdampfer** nach Anspruch 1 und 2
**dadurch gekennzeichnet, dass** durch das Zuluftrohr unterhalb seiner Öffnungen im Reaktor ein Raum der Höhe h abgegrenzt wird, in dem das Verdampfungsgut durch Zufluss und Abfluss **(8)** für den kontinuierlichen Verdampfungsprozess bereitgestellt werden kann.

6. **Unterdruck- Latentwärmeverdampfer** nach Anspruch 1 bis 4
**dadurch gekennzeichnet, dass**
der durch die Verdampfung erzielte Wassergehalt der abgekühlten und gesättigten feuchten Luft am Austritt aus dem Unterdruckerzeuger ohne zusätzliche technische Betriebsmittel aufgefangen werden kann.

7. **Unterdruck- Latentwärmeverdampfer** nach Anspruch 1 und 4
**dadurch gekennzeichnet, dass**
der Reaktor deshalb sowohl zur Verdampfung von Wasser aus dem Verdampfungsgut, als auch zur Luftbehandlung durch Kühlung und Entfeuchtung eingesetzt werden kann.
